# EUROPÄISCHE PATENTSCHRIFT

(11) **EP 2 451 603 B1**
(45) Veröffentlichungstag und Bekanntmachung des Hinweises auf die Patenterteilung: **11.09.2013**
(21) Anmeldenummer: 10740508.6
(22) Anmeldetag: 08.07.2010
(51) Int. Cl.: B23H 3/00, B23H 7/26

(54) **VORRICHTUNG UND VERFAHREN ZUM ELEKTROCHEMISCHEN ABTRAGEN EINER OBERFLÄCHE EINES BAUTEILS**
DEVICE AND METHOD FOR ELECTROCHEMICALLY REMOVING A SURFACE OF A COMPONENT
DISPOSITIF ET PROCÉDÉ D'ENLÈVEMENT ÉLECTROCHIMIQUE D'UNE SURFACE D'UN COMPOSANT

(30) Priorität: 10.07.2009 DE 102009032563
(43) Veröffentlichungstag der Anmeldung: 16.05.2012
(73) Patentinhaber: MTU Aero Engines GmbH, 80995 München (DE)
(72) Erfinder: PLATZ, Albin, 86510 Ried-Baindlkirch (DE); HUTTNER, Roland, 82287 Jesenwang (DE)
(86) Internationale Anmeldenummer: PCT/DE2010/000791
(87) Internationale Veröffentlichungsnummer: WO 2011/003400

(56) Entgegenhaltungen:
- EP-A1- 1 900 466
- GB-A- 935 819
- GB-A- 1 276 244
- GB-A- 1 286 740

## Beschreibung

Die Erfindung betrifft eine Vorrichtung der im Oberbegriff des Patentanspruchs 1 angegebenen Art sowie ein Verfahren der im Oberbegriff des Patentanspruchs 13 angegebenen Art zum elektrochemischen Abtragen einer Oberfläche eines Bauteils.

Eine derartige Vorrichtung sowie ein derartiges Verfahren sind beispielsweise bereits aus der EP 1 900 466 A1 als bekannt zu entnehmen. Die dort offenbarte Vorrichtung umfasst mehrere Elektroden, die jeweils eine mit einer herzustellenden Oberfläche des Bauteils korrespondierende Außenkontur aufweisen. Weiterhin umfasst die Vorrichtung als Hydraulikdruckeinrichtung mehrere 1-lydraulikdruckzylinder, die jeweils einen mit einer Elektrode gekoppelten Druckkolben und einen mit dem Druckkolben in Wirkverbindung stehenden Hydraulikraum aufweisen. Zum Bewegen der betreffenden Elektrode wird Hydraulikmedium zwischen zwei Teilräumen des Hydraulikraums umgepumpt, wodurch gegenüberliegende Wirktlächen des Druckkolbens mittels des Hydraulikmediums abwechselnd mit einer Stellkraft beaufschlagt werden können. Hierdurch kann der Druckkolben innerhalb des Hydraulikraums relativ zu diesem bewegt werden, wodurch die über eine Schubstange mit dem Druckkolben gekoppelte Elektrode entsprechend zum Bauteil hin oder von diesem weg bewegt wird. Das zu bearbeitende Bauteil, welches als Schaufel eines Rotors einer Strömungsmaschine ausgebildet ist, ist im Wesentlichen vorgeformt und weist im zu bearbeitenden Bereich ein Aufmaß auf, welches mit Hilfe der Elektroden über ein elektrochemisches Abtragverfahren (ECM bzw. PECM) entfernt wird. Hierbei werden das Bauteil und die Elektroden in einem Elektrolyten angeordnet und die Oberfläche des Bauteils im Bereich des Aufmaßes durch Anlegen einer elektrischen Spannung bzw. eines elektrischen Stroms zwischen dem Bauteil und der wenigstens einen Elektrode abgetragen.

Als nachteilig an der bekannten Vorrichtung ist der Umstand anzusehen, dass die Beaufschlagung des Druckkolbens mit der gewünschten Stellkraft nur vergleichsweise ungenau und langsam durchgeführt werden kann, so dass die Bewegung der mit dem Druckkolben gekoppelten Elektrode insbesondere bei gepulsten oder periodischen Bewegungen entsprechend unpräzise und träge ist. Daher können Außenkonturen mit kleinen Toleranzen praktisch nicht oder nur mit hohem Aufwand und entsprechend hohen Produktionskosten hergestellt werden.

Aufgabe der vorliegenden Erfindung ist es, eine Vorrichtung und ein Verfahren der eingangs genannten Art zu schaffen, welche eine verbesserte und präzisere Erzeugung einer Außenkontur eines Bauteils ermöglichen.

Die Aufgabe wird erfindungsgemäß durch eine Vorrichtung mit den Merkmalen des Patentanspruchs 1 und durch ein Verfahren mit den Merkmalen des Patentanspruchs 13 zum elektrochemischen Abtragen einer Oberfläche eines Bauteils gelöst. Vorteilhafte Ausgestaltungen mit zweckmäßigen Weiterbildungen der Erfindung sind in den jeweiligen Unteransprüchen angegeben, wobei vorteilhafte Ausgestaltungen der Vorrichtung als vorteilhafte Ausgestaltungen des Verfahrens und umgekehrt anzusehen sind.

Bei einer erfindungsgemäßen Vorrichtung, welche eine verbesserte und präzisere Erzeugung einer Außenkontur eines Bauteils ermöglicht, ist vorgesehen, dass der Hydraulikraum fluidisch gegenüber dem Druckkolben gekapselt ist. Mit anderen Worten ist vorgesehen, dass der Druckkolben nicht unmittelbar mit dem Hydraulikmedium in Kontakt steht, sondern mittelbar mit der durch das Hydraulikmedium übertragenen Stellkraft beaufschlagbar ist. Hierdurch kann im Unterschied zum Stand der Technik die Zahl an abzudichtenden Flächen innerhalb der Hydraulikdruckeinrichtung erheblich verringert werden, wodurch eine entsprechend verbesserte, präzisere und schnellere Kraftbeaufschlagung des Druckkolbens ohne die Gefahr von Undichtigkeiten ermöglicht ist. Vorzugsweise kann die Hydraulikdruckeinrichtung sogar dichtungsfrei ausgebildet sein, so dass während des Abtragens problemlos auch sehr hohe Fluiddrücke über das Hydraulikmedium erzeugt werden können. Weiterhin kann der Druckkolben bzw. die mit diesem gekoppelte Elektrode gegen einen hohen Elektrolytdruck, wie er beispielsweise zum Spülen eines Spalts zwischen der Elektrode und dem Bauteil erforderlich sein kann, bewegt werden. Da der Druckkolben nicht innerhalb des viskosen Hydraulikmediums angeordnet ist, können zudem auch schnelle Bewegungen der Elektrode sowie hochfrequente Schwingungsbewegungen, die gegebenenfalls einer weiteren Bewegung überlagert sein können, dargestellt werden. Hierdurch ergibt sich einerseits eine weitere Steigerung der Abbildungsgenauigkeit, andererseits wird aufgrund der präzisen Bewegbarkeit der Elektrode auch bei hohen Relativgeschwindigkeiten zwischen der Elektrode und dem Bauteil eine Beschädigung des Bauteils aufgrund von Kurzschlüssen zuverlässig verhindert. Aufgrund der erhöhten Präzision können somit aufwändige und kostenintensive Nachbearbeitungsschritte vermieden und kürzere Verfahrenszeiten erzielt werden. Des weiteren kann die erfindungsgemäße Vorrichtung besonders kompakt, leicht und bauraumsparend ausgebildet werden, wodurch eine wesentliche Erhöhung der Abbildungsgenauigkeit auch bei Bauteilen mit komplexen Geometrien und eng benachbarten Oberflächen erzielbar ist.

In der Erfindung ist vorgesehen, dass der Hydraulikraum mittels eines elastisch verformbaren Festkörpergelenks, insbesondere einer Membran, fluidisch gegenüber dem Druckkolben gekapselt ist. Dies stellt eine konstruktiv einfache und kostengünstige Möglichkeit zur Kapselung des Hydraulikraums dar, so dass die Hydraulikdruckeinrichtung Weise besonders einfach dichtungsfrei ausgebildet werden kann. Zum Bewegen der Elektrode kann das Festkörpergelenk dabei durch Zu- oder Abführen von Hydraulikmedium in den bzw. aus dem Hydraulikraum im Bereich elastischer Verformungen ausgelenkt werden, so dass der Druckkolben mittelbar über das Festkörpergelenk mit der entsprechenden Stellkraft beaufschlagbar ist.

Um eine über die gesamte Anlagefläche zwischen dem Druckkolben und dem Festkörpergelenk gleichmäßige Bewegung zu ermöglichen, ist das Festkörpergelenk ringförmig ausgebildet ist.

In einer weiteren vorteilhaften Ausgestaltung der Erfindung ist vorgesehen, dass der Druckkolben über wenigstens ein Federelement, insbesondere über ein elastisch verformbares Festkörpergelenk, mit einem Gehäuse der Hydrauükdruckeinrichtung gekoppelt ist. Hierdurch ist eine einfache Möglichkeit geschaffen, den Druckkolben unverlierbar und beweglich an der Hydraulikdruckeinrichtung zu lagem. Das Festkörpergelenk kann dabei zusätzlich die Funktion eines Drehlagers erfüllen, um welches der Druckkolben, ähnlich wie bei einer Wippe, verschwenkt werden kann. Zudem kann mit Hilfe des Federelements einfach eine Nulllage des Druckkolbens definiert werden.

Weitere Vorteile ergeben sich, indem die Hydraulikdruckeinrichtung eine Rückstelleinrichtung umfasst, mittels welcher der Druckkolben mit einer Rückstellkraft beaufschlagbar ist. Hierdurch ist eine einfache Möglichkeit gegeben, den Druckkolben durch Beaufschlagen mit der Rückstellkraft aus einer ausgelenkten Stellung zurück in seine Nulllage oder weiter in eine bezügüch der Nullage entgegengesetzte Stellung zu bewegen. Hierdurch wird eine weitere Verbesserung der Präzision beim Abtragen der Oberfläche erzielt. Zudem können gepulste oder periodische Schwingbewegungen besonders einfach und mit hohen Frequenzen dargestellt werden. Weiterhin ist es mit Hilfe der Rückstelleinrichtung möglich, eine maximale Auslenkung des Druckkolbens zu definieren.

Dabei hat es sich in weiterer Ausgestaltung als vorteilhaft gezeigt, wenn die Rückstelleinrichtung ein Federelement, insbesondere ein Festkörpergelenk, und/oder einen weiteren Hydraulikraum zur Aufnahme von Hydraulikmedium umfasst. Hierdurch ist eine besonders variable konstruktive Ausbildung der Vorrichtung ermöglicht.

In einer weiteren vorteilhaften Ausgestaltung der Erfindung ist vorgesehen, dass der weitere Hydraulikraum, vorzugsweise mittels eines elastisch verformbaren Festkörpergelenks, insbesondere mittels einer Membran, fluidisch gegenüber dem Druckkolben gekapseit ist. Die sich hieraus ergebenden Vorteile sind den im Zusammenhang mit dem vorstehend erläuterten Hydraulikraum zu entnehmen. Dabei kann bevorzugt vorgesehen sein, dass jeder Hydraulikraum der Hydraulikdruckeinrichtung fluidisch gegenüber dem Druckkolben gekapselt ist, um auf einfache Weise eine dichtungsfreie Ausbildung der Hydraulikdruckeinrichtung zu ermöglichen.

Um eine definierte Auslenkbarkeit des Druckkolbens und damit seiner zugeordneten Elektrode zu erzeugen, hat es sich in weiterer Ausgestaltung der Erfindung als vorteilhaft gezeigt, wenn zumindest ein Anschlag vorgesehen ist, mittels welchem eine Bewegung des Druckkolbens zu begrenzen ist. Hierdurch kann eine unerwünschte Kollision zwischen der Elektrode und dem Bauteil zuverlässig verhindert werden, so dass eine durchgängig hohe Bauteilqualität sichergestellt ist. Dabei kann vorgesehen sein, dass wenigstens zwei Anschläge vorgesehen sein, mittels welchen entgegensetzte maximale Auslenkungen des Druckkolbens definiert sind.

In einer weiteren vorteilhaften Ausgestaltung der Erfindung ist vorgesehen, dass eine Regel- und/oder Steuereinrichtung zum Erzeugen einer, vorzugsweise linear, oszillierenden und/oder gepulsten Stellkraft auf den Druckkolben vorgesehen ist. Auf diese Weise kann eine variable Schwingungsbewegung des Druckkolbens bzw. der Elektrode erzeugt werden, wodurch auf einfache Weise eine Zwangsspülung eines Spalts zwischen der Elektrode um dem Bauteil mit einem Elektrolyten bewerkstelligt werden kann.

Dabei hat es sich in weiterer Ausgestaltung als vorteilhaft gezeigt, wenn mittels der Regel- und/oder Steuereinrichtung eine Amplitude der Stellkraft auf einen Wert zwischen 0,01 mm und 1,0 mm und/oder eine Frequenz der Stellkraft auf einen Wert zwischen 0 Hz und 250 Hz einstellbar ist. Hierdurch ist eine optimale Anpassbarkeit der Vorrichtung an unterschiedlich geformte Oberflächen sowie an unterschiedliche Materialien ermöglicht.

In einer weiteren vorteilhaften Ausgestaltung der Erfindung ist vorgesehen, dass die Vorrichtung ausgebildet ist, eine Bewegungsachse der Elektrode in einem vorbestimmten und/oder einstellbaren Anstellwinkel, insbesondere in einem Anstellwinkel zwischen 30° und 60°, gegenüber einer Bewegungsachse des Bauteils anzuordnen. Unter Bewegungsachse des Bauteils ist dabei diejenige Achse zu verstehen, entlang der eine relative Vorschub- bzw. Zustellbewegung des Bauteils auf die Elektrode hin durchgeführt wird. Dabei können grundsätzlich das Bauteil und/oder die Vorrichtung bzw. die Elektrode bewegt werden. Mit Hilfe eines derartigen Anstellwinkels kann vorteilhaft ausgeschlossen werden, dass sich zwischen der Elektrode und dem Bauteil ein zu hoher Fluiddruck aufbauen kann, welcher zu einem Verbiegen des Bauteils und/oder der Elektrode führen könnte. Zusätzlich ist eine Beschädigung des Bauteils durch Kurzschlüsse ausgeschlossen.

In weiterer Ausgestaltung der Erfindung ist vorgesehen, dass die Vorrichtung wenigstens eine weitere Elektrode umfasst, welche eine mit einer weiteren herzustellenden Oberfläche des Bauteils korrespondierende Außenkontur aufweist, wobei jede Elektrode der Vorrichtung relativ zum Bauteil bewegbar ist. Auf diese Weise kann wenigstens eine weitere Oberfläche des Bauteils abgetragen werden, wodurch entsprechende Zeit- und Kostenvorteile erzielbar sind. Dabei kann vorgesehen sein, dass wenigstens zwei Elektroden über einen gemeinsamen Druckkolben der Hydraulikdruckeinrichtung zu bewegen ist. Alternativ kann vorgesehen sein, dass wenigstens zwei Druckkolben vorgesehen sind, die jeweils mit wenigstens einer Elektrode gekoppelt und unabhängig voneinander bewegbar sind. Im Falle mehrerer Druckkolben hat es sich zudem aus den vorstehend genannten Gründen als vorteilhaft gezeigt, wenn jeder Druckkolben fluidisch gegenüber seinem jeweils zugeordneten Hydraulikraum gekapselt ist.

In dem die Vorrichtung wenigstens zwei Elektroden umfasst, die gegenläufig zueinander in Richtung auf das Bauteil und zurück bewegbar sind, können einander gegenüberliegende Oberflächen des Bauteils gleichzeitig abgetragen werden. Beispielsweise können somit in einem Durchgang eine Saugseitenkontur und eine Druckseitenkontur einer Schaufel eines Rotors für eine Strömungsmaschine gleichzeitig hergestellt werden.

Um eine erhöhte Abbildungsgeschwindigkeit zu erzielen, hat es sich weiterhin als vorteilhaft gezeigt, wenn zwischen wenigstens zwei Elektroden der Vorrichtung ein Zuführkanal für einen Elektrolyten ausbildbar ist. Hierdurch kann der zum elektrochemischen Abtragen benötigte Elektrolyt während der Bearbeitung eines Bauteils in den Spalt zwischen den wenigstens zwei Elektroden und der Oberfläche des Bauteils eingebracht werden.

Ein weiterer Aspekt der Erfindung betrifft ein Verfahren zum elektrochemischen Abtragen einer Oberfläche eines Bauteils, gemäß Anspruch 13 wobei zumindest die Schritte Bereitstellen eines insbesondere vorgeformten Bauteils mit einem Aufmaß, Bereitstellen wenigstens einer Elektrode, die eine mit einer herzustellenden Oberfläche des Bauteils korrespondierende Außenkontur aufweist und mit einem Druckkolben einer Hydraulikdruckeinrichtung gekoppelt ist, Relatives Anordnen des Bauteils und der wenigstens einen Elektrode zueinander in einem Elektrolyten und Abtragen der Oberfläche des Bauteils zumindest im Bereich des Aufmaßes durch Anlegen einer elektrischen Spannung bzw. eines elektrischen Stroms zwischen dem Bauteil und der wenigstens einen Elektrode durchgeführt werden. Dabei wird eine verbesserte und präzisere Erzeugung der Außenkontur des Bauteils erfindungsgemäß dadurch ermöglicht, dass der Druckkolben mit einem fluidisch gegenüber dem Druckkolben gekapselten Hydraulikraum der Hydraulikdruckeinrichtung in Wirkverbindung gebracht und der Druckkolben während des Abtragens zumindest zeitweise mittels eines Hydraulikmediums mit einer Stellkraft beaufschlagt und relativ zur Hydraulikdruckeinrichtung bewegt wird. Mit anderen Worten ist vorgesehen, dass der Druckkolben nicht unmittelbar mit dem Hydraulikmedium in Kontakt steht, sondern mittelbar mit der durch das Hydraulikmedium übertragenen Stellkraft beaufschlagt wird. Hierdurch kann im Unterschied zum Stand der Technik die Zahl an abzudichtenden Flächen innerhalb der Hydraulikdruckeinrichtung erheblich verringert werden, wodurch eine entsprechend verbesserte, präzisere und schnellere Kraftbeaufschlagung des Druckkolbens ohne die Gefahr von Undichtigkeiten ermöglicht ist. Vorzugsweise kann sogar eine dichtungsfrei ausgebildete Hydraulikdruckeinrichtung verwendet werden, so dass während des Abtragens problemlos auch sehr hohe Fluiddrücke über das Hydraulikmedium erzeugt werden können. Weiterhin kann der Druckkolben bzw. die mit diesem gekoppelte Elektrode gegen einen hohen Elektrolytdruck, wie er beispielsweise zum Spülen eines Spalts zwischen der Elektrode und dem Bauteil erforderlich sein kann, bewegt werden. Da der Druckkolben nicht innerhalb des viskosen Hydraulikmediums angeordnet wird, können zudem auch schnelle Bewegungen der Elektrode sowie hochfrequente Schwingungsbewegungen, die gegebenenfalls einer weiteren Bewegung überlagert werden können, dargestellt werden. Hierdurch ergibt sich einerseits eine weitere Steigerung der Abbildungsgenauigkeit, andererseits wird aufgrund der präzisen Bewegbarkeit der Elektrode auch bei hohen Relativgeschwindigkeiten zwischen der Elektrode und dem Bauteil eine Beschädigung des Bauteils aufgrund von Kurzschlüssen zuverlässig verhindert. Aufgrund der erhöhten Präzision können somit aufwändige und kostenintensive Nachbearbeitungsschritte vermieden und kürzere Verfahrenszeiten erzielt werden. Des weiteren kann eine besonders kompakt, leicht und bauraumsparend ausgebildete Vorrichtung zum Abtragen der Oberfläche verwendet werden, wodurch eine wesentliche Erhöhung der Abbildungsgenauigkeit auch bei Bauteilen mit komplexen Geometrien und eng benachbarten Oberflächen erzielbar ist. Vorzugsweise ist die zum Abtragen verwendete Vorrichtung gemäß einem der vorhergehenden Ausführungsbeispiele ausgebildet.

Dabei hat es sich als vorteilhaft gezeigt, wenn zwei Elektroden bereitgestellt und beim Abtragen gegenläufig zueinander in Richtung auf das Bauteil und zurück bewegt werden. Hierdurch können gleichzeitig einander gegenüberliegende Oberflächen eines Bauteils bearbeitet und abgetragen werden, wodurch sich entsprechende Zeit- und Kostenvorteile ergeben. Beispielsweise kann gleichzeitig eine Saugseitenkontur und eine Druckseitenkontur einer Schaufel eines Rotors für eine Strömungsmaschine erzeugt werden.

Indem der Bewegung jeder Elektrode zumindest beim Abtragen eine Zustellbewegung des Bauteils entlang einer Bewegungsachse überlagert wird. Hierdurch kann eine besonders präzise und optimal an die jeweilige Bauteilgeometrie angepasste Kinematik erzeugt werden, wodurch sich hohe Abbildungsgenauigkeiten in kurzen Prozesszeiten erzielen lassen.

Besondere Kostenvorteile ergeben sich, wenn als Bauteil eine Schaufel eines Rotors, insbesondere eines integral beschaufelten Rotors, bearbeitet wird, da aufgrund der hohen Präzision und Schnelligkeit des erfindungsgemäßen Verfahrens hierbei besondere Zeit- und Kostensenkungen erzielbar sind. Zudem kann auf aufwändige Nachbearbeitungsschritte verzichtet werden.

Dabei zeigt:
- Fig. 1: eine schematische Schnittansicht einer aus dem Stand der Technik bekannten Vorrichtung zum elektrochemischen Abtragen einer Oberfläche eines Bauteils;
- Fig. 2: eine schematische Schnittansicht einer erfindungsgemäßen Vorrichtung zum elektrochemischen Abtragen einer Oberfläche eines Bauteils;
- Fig. 3: eine schematische Schnittansicht eines ersten Ausführungsbeispiels einer Hydraulik-druckeinrichtung;
- Fig. 4: eine schematische Schnittansicht eines zweiten Ausführungsbeispiels der Hydraulik-druckeinrichtung;
- Fig. 5: eine schematische Schnittansicht zweier Elektroden der in Fig. 2 gezeigten Vorrichtung zu Beginn eines elektrochemischen Abtrag-Schrittes; und
- Fig. 6: eine schematische Schnittansicht zweier Elektroden der in Fig. 2 gezeigten Vorrichtung nach Abschluss des elektrochemischen Abtrag-Schrittes.

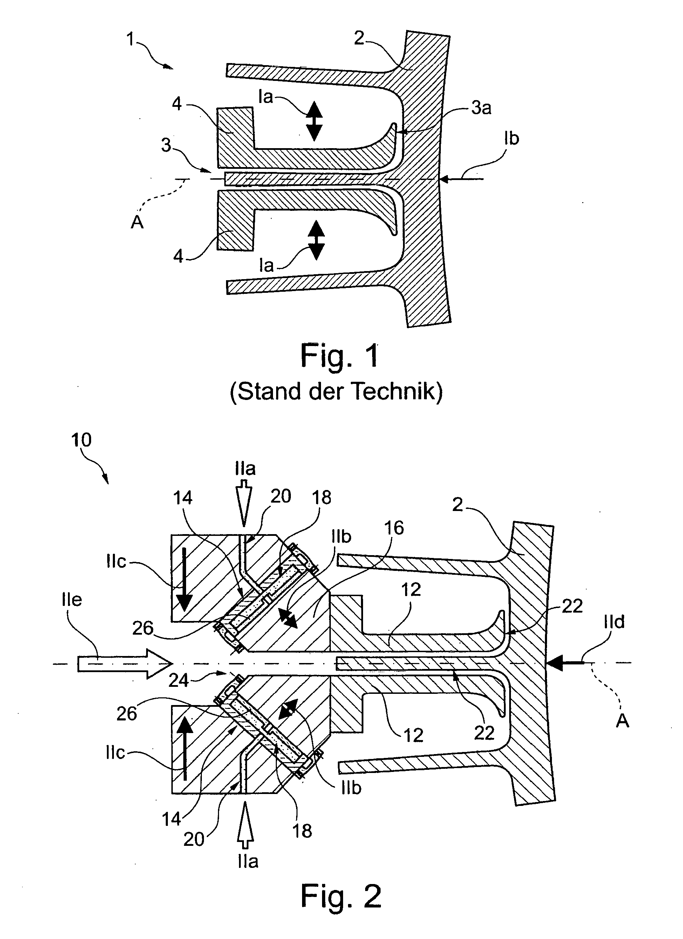

Fig. 1 zeigt eine schematische Schnittansicht einer aus dem Stand der Technik bekannten Vorrichtung 1 zum elektrochemischen Abtragen einer Oberfläche eines Bauteils 2 mit Hilfe eines gepulsten elektrochemischen Verfahrens (PECM). Das Bauteil 2, welches zumindest im abzutragenden Bereich ein Aufmaß aufweist, wird dabei unter Ausbildung eines Spalts 3 relativ zu Elektroden 4 der Vorrichtung 1 bewegt, wobei aus Gründen der Übersichtlichkeit die die Elektroden 4 bewegenden Hydraulikeinrichtungen der Vorrichtung 1 nicht abgebildet sind. Die Elektroden 4 werden gemäß den Doppelpfeilen la senkrecht oder im Kreisbogen mit überlagerten mechanischen Pulsen aufeinander zu bewegt, während das Bauteil 2 eine Zustellbewegung gemäß Pfeil Ib entlang einer Bewegungsachse A ausführt. Das Abtragen der Oberfläche des Bauteils 2 wird zumindest im abzutragenden Bereich mit Hilfe eines an sich bekannten elektrochemischen Verfahren (ECM bzw. PECM) durchgeführt. Bei dem Bauteil 2 handelt es sich um ein integral beschaufeltes Verdichterlaufrad einer Strömungsmaschine.

Der Nachteil dieser Bearbeitung liegt darin, dass der Spalt 3 zwischen den Elektroden 4 und dem Bauteil 2 insbesondere im Bereich eines Ringraumes 3a nicht ausreichend gespült werden kann und deshalb ein langsamer Vorschub mit größerem Spalt 3 gewählt werden muss. Die Abbildungsgenauigkeit im Ringraum 3a ist deshalb gering. Beim Erhöhen der Vorschubgeschwindigkeit wächst dagegen die Gefahr der Beschädigung des Bauteils 2 durch Kurzschlüsse stark an. Zudem ist eine synchronisierte überlagerte Schwingbewegung des Bauteils 2 wegen seiner vergleichsweise hohen Masse problematisch. Auch die bekannte Vorrichtung 1 besitzt ein vergleichsweise hohes Gewicht sowie einen hohen Bauraumbedarf, um die erforderliche Steifigkeit zur präzisen Bewegung der Elektroden 4 zu erzielen. Da die Toleranzen großer Maschinen aufgrund von Wärmebeeinflussung und langen Hebelarmen naturgemäß größer sind, ist es mit erheblichem Aufwand verbunden, Bauteile 2 mit kleinen Toleranzen herzustellen.

Fig. 2 zeigt eine schematische Schnittansicht einer erfindungsgemäßen Vorrichtung 10 zum elektrochemischen Abtragen einer Oberfläche eines vorliegend als Schaufel eines integral beschaufelten Rotors ausgebildeten Bauteils 2. Die Vorrichtung 10 umfasst zwei einander gegenüberliegend angeordnete Elektroden 12, die jeweils eine mit einer herzustellenden Oberfläche des Bauteils 2 korrespondierende Außenkontur aufweisen. Jeder Elektrode 12 ist eine Hydraulikdruckeinrichtung 14 zugeordnet, wobei jede Hydraulikdruckeinrichtung 14 einen mit der jeweiligen Elektrode 12 gekoppelten Druckkolben 16 und einen mit dem Druckkolben 16 in Wirkverbindung stehenden Hydraulikraum 18 zur Aufnahme von Hydraulikmedium aufweist. Das Hydraulikmedium kann dabei gemäß den Pfeilen IIa über entsprechende Versorgungskanäle 20 in die Hydraulikräume 18 eingebracht werden, wodurch die Druckkolben 16 mittels des Hydraulikmediums mit einer Stellkraft beaufschlagt und retativ zur jeweiligen Hydraulikdruckeinrichtung 14 bewegt werden. Entsprechend kann durch Abführen von Hydraulikmedium aus den Hydraulikräumen 18 entgegen der Pfeilrichtung der Pfeile IIa ein Abbruch der Stellkraftbeaufschlagung erzielt werden, so dass die mit den Druckkolben 16 gekoppelten Elektroden 12 gemäß den Doppelpfeilen IIa auf das Bauteil 2 zu oder von diesem wegbewegt werden können. Die Bewegung der Elektroden 12 wird durch eine nicht gezeigte Regel- und/oder Steuereinrichtung der Vorrichtung 1 gesteuert, so dass beispielsweise eine linear oszillierende oder gepulste Stellkraft auf die Druckkolben 16 und eine entsprechende Schwingungs- oder Pulsbewegung der Elektroden 12 erzeugbar ist. Beispielsweise kann

eine Amplitude der Stellkraft auf einen Wert zwischen 0,01 mm und 1,0 mm und/oder eine Frequenz der Stellkraft auf einen Wert zwischen 0 Hz und 250 Hz eingestellt werden.

Die Vorrichtung 10 ist dabei auf minimale Abmessungen ausgelegt, so dass die Länge ihrer gezeigten Elemente, d.h. die Länge der Hydraulikdruckeinrichtungen 14 und der Elektroden 12, nicht mehr als das fünffache der zu bearbeitenden Oberflächenlänge des Bauteils 2 beträgt. Die Hydraulikdruckeinrichtungen 14 können dabei aufgrund ihres kompakten und einfachen Aufbaus grundsätzlich durch sogenannte Rapid Manufacturing-Verfahren hergestellt werden, wodurch sich entsprechende Kostenvorteile ergeben.

Die Vorrichtung 10 ist dabei derart ausgebildet, dass die durch die Doppelpfeile IIb symbolisierten Bewegungsachsen der Elektroden 12 in einem Anstellwinkel von etwa 45° gegenüber der Bewegungsachse A des Bauteils 2 angeordnet sind. Auf diese Weise kann eine Zwangsspülung eines engen Spalts 22 zwischen dem Bauteil 2 und den Elektroden 12 mit Elektrolyt sowohl im Schaufelblattbereich als auch im Ringraum des Bauteils 2 bei entsprechend genauer Abbildung der Außenkontur der Elektroden 12 gefahren werden. Zusätzlich besteht die Möglichkeit, die Elektroden 12 gemäß den Pfeilen IIc senkrecht auf das Bauteil 2 zu oder von diesem weg zu bewegen und/oder das Bauteil 2 gemäß Pfeil IId entlang der Bewegungsachse A auf die Elektroden 12 zu bzw. von diesen weg zu bewegen. Dabei können beispielsweise Geschwindigkeiten in der Größenordnung zwischen 0,01 mm/min und 2,50 mm/min vorgesehen sein. Die Vorschubbewegungen der Elektrodenzustellung und der Bauteilzustellung können als gewöhnliche NC-Achsen ausgeführt werden.

Der Elektrolyt kann seinerseits gemäß Pfeil IIe zugeführt werden, wobei die zwei Elektroden 12 einen Zuführkanal 24 für den Elektrolyten ausbilden. Zum Abtragen der Oberfläche des Bauteils 2 zumindest im Bereich des Aufmaßes wird dann eine elektrische Spannung, vorzugsweise eine pulsierende Gleichspannung, bzw. ein elektrischer Strom, vorzugsweise ein pulsierender Gleichstrom, zwischen dem Bauteil 2 und den Elektroden 12 angelegt.

Die Bewegung der Elektroden 12 unter dem Anstellwinkel bei gleichzeitig hoher Abbildungsgenauigkeit und kurzen Prozesszeiten wird dabei durch die speziell konzipierte Vorrichtung 10 erzielt. Wie aus Fig. 2 erkennbar ist, sind die Hydraulikdruckeinrichtungen 14 jeweils als kompakte Bewegungseinheiten ausgebildet, wobei beide Hydraulikräume 18 durch jeweilige Festkörpergelenke 26 fluidisch gegenüber ihren jeweiligen Druckkolben 16 gekapselt sind. Die Hydraulikdruckeinrichtungen 14 sind somit dichtungsfrei und beaufschlagen die Druckkolben 16 ausschließlich unter elastischer Verformung der Festkörpergelenke 26. Mit Hilfe der Vorrichtung bzw. der Hydraulikdruckeinrichtungen 14 sind grundsätzlich eine wesentliche Erhöhung der Abbildungsgenauigkeit des Bauteils 2, eine wesentliche Verkleinerung und Kostenreduzierung der Vorrichtung 10 und eine erhöhte Qualität der hergestellten Bauteile 2 ermöglicht.

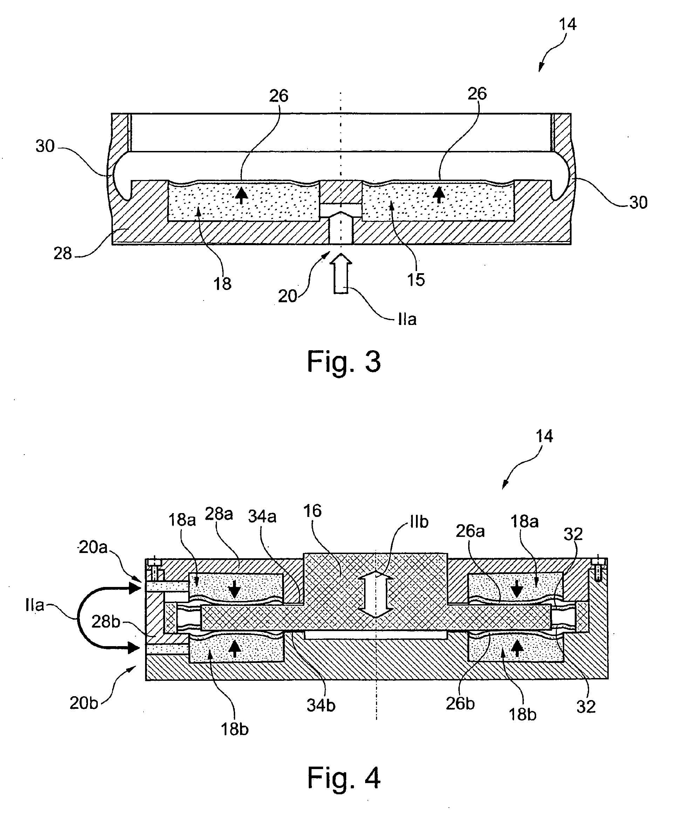

Fig. 3 zeigt eine schematische Schnittansicht eines ersten Ausführungsbeispiels der Hydraulikdruckeinrichtung 16, welche zur Verwendung in der in Fig. 2 gezeigten Vorrichtung 10 geeignet ist. Aus Gründen der Übersichtlichkeit ist der Druckkolben 16 nicht abgebildet. Die Hydraulikdruckeinrichtung 16 umfasst ein Gehäuse 28, welches den Grundkörper bildet. In das Gehäuse 28 ist das Festkörpergelenk 26 integriert, welches membranartig und ringförmig ausgebildet ist. Durch Zuführen des Hydraulikmediums gemäß Pfeil IIa in den ebenfalls ringförmigen Hydraulikraum 18 8 wird eine Stellkraft auf den am Festkörpergelenk 26 anliegenden Druckkolben 16 erzeugt. Zum Zurückbewegen des Druckkolbens 16 in seine Nulllage umfasst das Gehäuse 28 eine Rückstelleinrichtung 30, welche vorliegend als integral mit dem Gehäuse 28 ausgebildetes Festkörpergelenk ausgebildet ist und mittels welcher der Druckkolben 16 mit einer der Stellkraft entgegengerichteten Rückstellkraft beaufschlagbar ist.

Fig. 4 zeigt eine schematische Schnittansicht eines zweiten Ausführungsbeispiels der Hydraulikdruckeinrichtung 14. Im Unterschied zum vorhergehenden Ausführungsbeispiel besteht das Gehäuse 28 aus einem Gehäuseoberteil 28a und einem Gehäuseunterteil 28b. Der Druckkolben 16 ist über zwei Federelemente 32 mit dem Gehäuse 28 der Hydraulikdruckeinrichtung 14 gekoppelt, wodurch seine Nulllage definiert ist. Die Federelemente 32 sind ebenfalls als elastisch verformbare Festkörpergelenke ausgebildet. Das Gehäuseoberteil 28a und das Gehäuseunterteil 28b umfassen jeweils einen Hydraulikraum 18a bzw. 18b, die ihrerseits durch Festkörpergelenke 26 fluiddicht gegenüber dem Druckkolben 16 gekapselt sind. Durch Umpumpen der Hydraulikflüssigkeit über die Versorgungskanäle 20a, 20b gemäß Doppelpfeil IIa kann der Druckkolben 16 mit einer Stell- oder einer Rückstellkraft beaufschlagt werden. Die Bewegung des Druckkolbens 16 wird dabei durch zwei Anschläge 34a, 34b begrenzt.

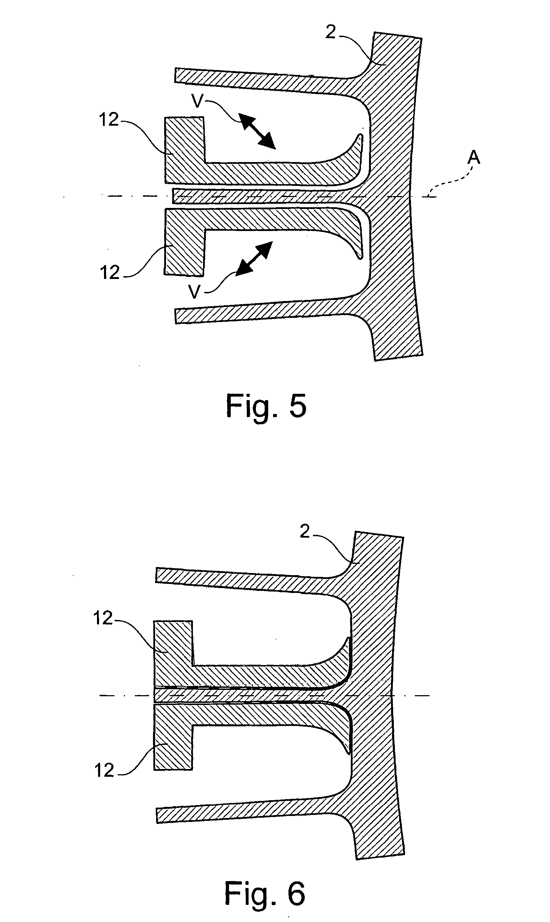

Fig. 5 zeigt eine schematische Schnittansicht der beiden Elektroden 12 der in Fig. 2 gezeigten Vorrichtung 10 zu Beginn eines elektrochemischen Abtrag-Schrittes, wobei die Elektroden 12 gemäß Doppelpfeil V mit einer oszillierenden Schwingungsbewegung bewegt werden. Die dabei realisierten Amplituden liegen zwischen 0 und 1 mm bei einer Frequenz von 0 bis 250 Hz.

Fig. 6 zeigt eine schematische Schnittansicht der Elektroden 12 der in Fig. 2 gezeigten Vorrichtung 10 nach Abschluss des elektrochemischen Abtrag-Schrittes. Hierbei ist insbesondere die exakte Abbildung der Außenkontur der Elektroden 12 auf der Oberfläche des Bauteils 2 erkennbar.

Die in den Unterlagen angegebenen Parameterwerte zur Definition von Prozess- und Messbedingungen für die Charakterisierung von spezifischen Eigenschaften des Erfindungsgegenstands sind auch im Rahmen von Abweichungen - beispielsweise aufgrund von Messfehlern, Systemfehlern, Einwaagefehlem, DIN-Toleranzen und dergleichen - als vom Rahmen der Erfindung mitumfasst anzusehen.

## Patentansprüche

1. Vorrichtung (10) zum elektrochemischen Abtragen einer Oberfläche eines Bauteils (2), insbesondere einer Schaufel eines integral beschaufelten Rotors, mit wenigstens einer Elektrode (12), die eine mit einer herzustellenden Oberfläche des Bauteils korrespondierende Außenkontur aufweist, und mit einer Hydraulikdiuckeinrichtung (14), die einen mit der Elektrode (12) gekoppelten Druckkolben (16) und einen mit dem Druckkolben (16) in Wirkverbindung stehenden Hydraulikraum (18) zur Aufnahme von Hydraulikmedium aufweist, wobei der Druckkotbsn (16) mittels des Hydraulikmediums mit einer Siellkmft beaufschlagbar und relativ zurHydraulikdruckeinrichtung (14) bewegbar ist, wobei
der Hydraulikraum (18) fluidisch gegenüber dem Druckkolben (16) gekapselt ist
**dadurch gekennzeichnet dass**;
der Hydraulikraum (18) mittels eines elastisch verformbaren Festkörpergelenks (26), in Form einer Membran, fluidisch gegenüber dem Druckkolben (16) gekapselt ist, und dass als Membran ausgeführte Festkörpergelenk (26) ringförmig ausgebildet ist und an seinem inneren und seinem äußeren Umfang mit einem Gehäuse (28) der Hydraulikdruckeinnchtung (14) verbunden ist.

2. Vorrichtung (10) Anspruch 1, **dadurch gekennzeichnet, dass** der Druckkolben (16) über wenigstens ein Federelement (32), insbesondere über ein elastisch verformbares Festkörpergelenk, mit dem Gehäuse (28) der Hydraulikdruckeinrichtung (14) gekoppelt ist.

3. Vorrichtung (10) nach Anspruch 2, **dadurch gekennzeichnet, dass** die Hydraulikdruckeinrichtung (14) eine Rückstelleinrichtung (30) umfasst, mittels welcher der Druckkolben (16) *mit einer Rückstellkraft beaufschlagbar ist.*

4. Vorrichtung (10) nach Anspruch 3, **dadurch gekennzeichnet, dass** die Rückstelleinrichtung (30) ein Federelement (32), insbesondere ein Festkörpergelenk, und/oder einen weiteren Hydraulikraum (18b) zur Aufnahme von Hydraulikmedium umfasst.

5. Vorrichtung (10) nach Anspruch 4, **dadurch gekennzeichnet, dass** der weitere Hydraulikraum (18b), mittels eines elastisch verforinbaren Festkörpergelenks (26b), insbesondere mittels einer Membran, fluidisch gegenüber dem Druckkolben (16) gekapselt ist.

6. Vorrichtung (10) nach einem der Ansprüche 1 bis 5, **dadurch gekennzeichnet, dass** zumindest ein Anschlag (34a, 34b) vorgeschen ist, mittels welchem eine Bewegung des Druckkolbens (16) zu begrenzen ist.

7. Vorrichtung (10) nach einem der Ansprüche 1 bis 6, **dadurch gekennzeichnet, dass** eine Regel- und/oder Steuereinrichtung zum Erzeugen einer linear oszillierenden und/oder gepulsten Stellkraft auf den Druckkolben (16) vorgesehen ist.

8. Vorrichtung (10) nach Anspruch 7, **dadurch gekennzeichnet, dass** mittels der Regelund/oder Steuereinrichtung eine Amplitude der Stellkraft auf einen Wert zwischen 0,01 mm und 1.0 mm und/oder eine Frequenz der Stellkraft auf einen Wert zwischen 0 Hz und 250 Hz einstellbar ist.

9. Vorrichtung (10) nach einem der Ansprüche 1 bis 8, **dadurch gekennzeichnet, dass** diese ausgebildet ist, eine Bewegungsachse der Elektrode (12) in einem vorbestimmten und/oder einstellbaren Anstellwinkel, insbesondere in einem Anstellwinkel zwischen 30° und 60°, gegenüber einer Bewegungsachse (A) des Bauteils (2) anzuordnen.

10. Vorrichtung (10) nach einem der Ansprüche 1 bis 9, **dadurch gekennzeichnet, dass** diese wenigstens eine weitere Elektrode (12) umfasst, welche eine mit einer weiteren herzustellenden Oberfläche des Bauteils (2) korrespondierende Außenkontur aufweist, wobei jede Elektrode (12) der Vorrichtung (10) relativ zum Bauteil (2) bewegbar ist.

11. Vorrichtung (10) nach Anspruch 10, **dadurch gekennzeichnet, dass** diese wenigstens zwei Elektroden (12) umfasst, die zueinander in Richtung auf das Bauteil (2) und zurück bewegbar sind.

12. Vorrichtung (10) nach Anspruch 10 oder 11, **dadurch gekennzeichnet, dass** zwischen wenigstens zwei Elektroden (12) ein Zuführkanal (24) für einen Elektrolyten ausbildbar ist.

13. Verfahren zum elektrochemischen Abtragen einer Oberfläche eines Bauteils (2), folgende Schritte umfassend:
- Bereitstellen eines insbesondere vorgeformten Bauteils (2) mit einem Aufmaß;
- Bereitstellen wenigstens einer Elektrode (12), die eine mit einer herzustellenden Oberfläche des Bauteils (2) korrespondierende Außenkontur aufweist und mit einem Druckkolben (16) einer Hydraulikdmckeinrichtung (14) gekoppelt ist;
- Relatives Anordnen des Bauteils (2) und der wenigstens einen Elektrode (12) zueinander in einem Elektrolyten; und
- Abtragen der Oberfläche des Bauteils (2) zumindest im Bereich des Aufmaßes durch Anlegen einer elektrischen Spannung bzw. eines elektrischen Stroms zwischen dem Bauteil (2) und der wenigstens einen Elektrode (12), wobei der Druckkolben (16) mit einem fluidisch gegenüber dem Druckkolben (16) gekapselten Hydraulikraum (18) der Hydraulikdruckeinrichtung (14) über ein als Membran ausgeführtes Festkörpergelenk (26) in Wirkverbindung gebracht und der Druckkolben (16) während des Abtragens zumindest zeitweise mittels eines Hydraulikmediums mit einer Stellkraft beaufschlagt und relativ zur Hydraulikdruckeinrichtung (14) bewegt wird,
**dadurch gekennzeichnet, dass**
der Druckkolben (16) von einem ringförmigen, an seinem inneren und seinem äußeren Umfang mit dem Gehäuse (28) der Hydraulikdruckeinrichtung (14) verbundenen, als Membran ausgeführtes Festkörpergelenk (26) linear bewegt wird.

14. Verfahren nach Anspruch 3, **dadurch gekennzeichnet, dass** zwei Elektroden (12) bereitgestellt und beim Abtragen gegenläufig zueinander in Richtung auf das Bauteil (2) und zurück bewegt werden.

15. Verfahren nach Anspruch 13 oder 4, **dadurch gekennzeichnet, dass** zumindest beim Abtragen der Bewegung jeder Elektrode (12) eine Zustellbewegung des Bauteils (2) entlang einer Bewegungsachse (A) überlagert wird.

16. Verfahren nach einem der Ansprüche 13 bis 15, **dadurch gekennzeichnet, dass** als Bauteil (2) eine Schaufel eines Rotors, insbesondere eines integral beschaufelten Rotors, bearbeitet wird.

## Claims

1. Device (10) for the electrochemical machining of a surface of a component (2), in particular of a blade of an integrally bladed rotor, with at least one electrode (12), which has an outer contour corresponding to a component surface to be produced, and with a hydraulic pressure apparatus (14), which has a pressure piston (16) linked to the electrode (12) and a hydraulic chamber (18) in operative connection with the pressure piston (16) for receiving hydraulic medium, wherein the pressure piston (16) can be acted upon with a positioning force by means of the hydraulic medium and is movable relative to the hydraulic pressure apparatus (14), wherein the hydraulic chamber (18) is encapsulated fluidically with respect to the pressure piston (16), **characterised in that** the hydraulic chamber (18) is encapsulated fluidically with respect to the pressure piston (16) by means of an elastically deformable flexure hinge (26), in the form of a membrane, and the flexure hinge (26) executed as a membrane is formed in the shape of a ring and is connected at its inner and its outer periphery to a housing (28) of the hydraulic pressure apparatus (14).

2. Device (10) according to claim 1, **characterised in that** the pressure piston (16) is linked via at least one spring element (32), in particular via an elastically deformable flexure hinge, to the housing (28) of the hydraulic pressure apparatus (14).

3. Device (10) according to claim 2, **characterised in that** the hydraulic pressure apparatus (14) comprises a restoring apparatus (30), by means of which the pressure piston (16) can be acted upon by a restoring force.

4. Device (10) according to claim 3, **characterised in that** the restoring apparatus (30) comprises a spring element (32), in particular a flexure hinge, and/or a further hydraulic chamber (18b) for receiving hydraulic medium.

5. Device (10) according to claim 4, **characterised in that** the further hydraulic chamber (18b) is encapsulated fluidically with respect to the pressure piston (16) by means of an elastically deformable flexure hinge (26b), in particular by means of a membrane.

6. Device (10) according to one of claims 1 to 5, **characterised in that** at least one stop (34a, 34b) is provided, by means of which a movement of the pressure piston (16) is to be limited.

7. Device (10) according to one of claims 1 to 6, **characterised in that** a regulating and/or control apparatus is provided for producing a linearly oscillating and/or pulsed positioning force on the pressure piston (16).

8. Device (10) according to claim 7, **characterised in that** an amplitude of the positioning force can be set to a value between 0.01 mm and 1.0 mm and/or a frequency of the positioning force can be set to a value between 0 Hz and 250 Hz by means of the regulating and/or control apparatus.

9. Device (10) according to one of claims 1 to 8, **characterised in that** it is configured to arrange a movement axis of the electrode (12) at a predetermined and/or adjustable angle of inclination, in particular at an angle of inclination between 30° and 60°, with respect to a movement axis (A) of the component (2).

10. Device (10) according to one of claims 1 to 9, **characterised in that** it comprises at least one further electrode (12), which has an outer contour corresponding to a further component (2) surface to be produced, wherein each electrode (12) of the device (10) is movable relative to the component (2).

11. Device (10) according to claim 10, **characterised in that** it comprises at least two electrodes (12) which are movable in relation to one another in the direction of the component (2) and back.

12. Device (10) according to claim 10 or 11, **characterised in that** a supply channel (24) for an electrolyte can be formed between at least two electrodes (12).

13. Method for the electrochemical machining of a surface of a component (2), comprising the following steps:
provision of an in particular preformed component (2) with an over-dimension;
- provision of at least one electrode (12), which has an outer contour corresponding to a component (2) surface to be produced and is linked to a pressure piston (16) of a hydraulic pressure apparatus (14);
- relative arrangement of the component (2) and the at least one electrode (12) relative to one another in an electrolyte; and
- machining of the surface of the component (2) at least in the area of the over-dimension by applying an electric voltage or an electric current between the component (2) and the at least one electrode (12), wherein the pressure piston (16) is brought into operative connection with a hydraulic chamber (18) of the hydraulic pressure apparatus (14), which chamber is encapsulated fluidically with respect to the pressure piston (16), via a flexure hinge (26) executed as a membrane and the pressure piston (16) is acted upon during machining at least at times with a positioning force by means of a hydraulic medium and is moved relative to the hydraulic pressure apparatus (14),
**characterised in that** the pressure piston (16) is moved linearly by a ring-shaped flexure hinge (26) executed as a membrane and connected at its inner and its outer periphery to the housing (28) of the hydraulic pressure apparatus (14).

14. Method according to claim 13, **characterised in that** two electrodes (12) are provided and upon machining are moved oppositely to one another in the direction of the component (2) and back.

15. Method according to claim 13 or 14, **characterised in that** at least during material removal an adjustment movement of the component (2) along a movement axis (A) is superposed on the movement of each electrode (12).

16. Method according to one of claims 13 to 15, **characterised in that** a blade of a rotor, in particular of an integrally bladed rotor, is machined as the component (2).

## Revendications

1. Dispositif (10) d'usinage électrochimique d'une surface d'un composant (2) en particulier d'une aube d'un rotor à aubage intégré, avec au moins une électrode (12), qui présente un contour extérieur correspondant à une surface à fabriquer du composant et avec un dispositif de pression hydraulique (14) qui comporte un piston de compression (16) couplé à l'électrode (12) et une chambre hydraulique (18) en liaison avec le piston de compression (16) pour recevoir le fluide hydraulique, le piston de compression (16) pouvant être pressurisé à une force de réglage au moyen du fluide hydraulique et pouvant être déplacé par rapport au dispositif de pression hydraulique (14), la chambre hydraulique (18) étant encapsulée en communication fluidique par rapport au piston de compression (16), **caractérisé en ce que** la chambre hydraulique (18) est encapsulée en communication fluidique par rapport au piston de compression (16) au moyen d'une jointure à corps solide (26) élastiquement déformable, sous forme d'une membrane, et la jointure à corps solide (26) réalisée comme une membrane est circulaire et reliée sur son pourtour intérieur et extérieur à un boitier (28) du dispositif de pression hydraulique (14).

2. Dispositif (1C) selon la revendication 1, **caractérisé en ce que** le piston de compression (16) est couplé par au moins un élément à ressort (32), en particulier par une jointure à corps solide élastiquement déformable, au boitier (28) du dispositif de pression hydraulique (14).

3. Dispositif (10) selon la revendication 2, **caractérisé en ce que** le dispositif de pression hydraulique (14) comprend un dispositif de rappel (30) permettant d'appliquer une force de rappel au piston de compression (16).

4. Dispositif (10) selon la revendication 3, **caractérisé en ce que** le dispositif de rappel (30) comprend un élément à ressort (32) en particulier une jointure à corps solide et/ou une autre chambre hydraulique (18b) pour recevoir le fluide hydraulique.

5. Dispositif (10) selon la revendication 4, **caractérisé en ce que** l'autre chambre hydraulique (18b) est encapsulée en communication fluidique par rapport au piston de compression (16) au moyen d'une jointure à corps solide (26b) élastiquement déformable, en particulier au moyen d'une membrane.

6. Dispositif (10) selon l'une des revendications 1 à 5, **caractérisé en ce qu'**au moins une butée (34a, 34b) est prévue pour limiter un mouvement du piston de compression (16).

7. Dispositif (10) selon l'une des revendications 1 à 6, **caractérisé en ce qu'**un dispositif de réglage et/ou de commande est prévu pour générer une force de réglage à oscillation linéaire et/ou pulsée sur le piston de compression (16).

8. Dispositif (10) selon la revendication 7, **caractérisé en ce qu'**une amplitude de la force de réglage peut être réglée au moyen du dispositif de réglage et/ou de commande sur une valeur comprise entre 0,01 mm et 1,0 mm et/ou une fréquence de la force de réglage peut être réglée sur une valeur comprise entre 0 Hz et 250 Hz.

9. Dispositif (10) selon l'une des revendications 1 à 8, **caractérisée en ce que** celui-ci est configuré pour prévoir un axe de déplacement de l'électrode (12) dans un angle d'attaque prédéterminé et/ou réglable, en particulier dans un angle d'attaque compris entre 30° et 60°, par rapport à un axe de déplacement (A) du composant (2).

10. Dispositif (10) selon l'une des revendications 1 à 9, **caractérisé en ce que** celui-ci comprend au moins une électrode supplémentaire (12) qui présente un contour extérieur correspondant à une autre surface à produire du composant (2), chaque électrode (12) du dispositif (10) pouvant être déplacée par rapport au composant (2).

11. Dispositif (10) selon la revendication 10, **caractérisé en ce que** celui-ci comprend au moins deux électrodes (12), qui peuvent être déplacées mutuellement en direction du composant (2) et en arrière.

12. Dispositif (10) selon les revendications 10 ou 11, **caractérisé en ce qu'**un canal d'alimentation (24) peut être configurée pour un électrolyte entre deux électrodes (12) au moins.

13. Procédé d'usinage électrochimique d'une surface d'un composant (2) comprenant les étapes suivantes :
- Mise à disposition d'un composant (2) notamment préformé avec un métré
- Mise à disposition d'au moins une électrode (12), qui comporte un contour extérieur correspondant à une surface à produire du composant (2) et qui est couplée avec un piston de compression (16) d'un dispositif de pression hydraulique (14) ;
- Disposition relative du composant (2) et d'au moins une électrode (12) par rapport à l'autre dans un électrolyte ; et
- Usinage de la surface du composant (2) au moins dans la zone du métré par application d'une tension électrique ou d'un courant électrique entre le composant (2) et au moins une électrode (12), le piston de compression (16) étant mis en liaison avec une chambre hydraulique (18) du dispositif de pression hydraulique (14) encapsulée en communication fluidique par rapport au piston de compression (16) au moyen d'une jointure à corps solide (26) réalisée comme une membrane et le piston de compression (16) pouvant être pressurisé à une force de réglage au moyen du fluide hydraulique pendant l'usinage, au moins temporairement, ledit piston pouvant être déplacé par rapport au dispositif de pression hydraulique (14), **caractérisé en ce que** le piston de compression (16) est déplacé de manière linéaire par une jointure à corps solide (26) circulaire configurée comme une membrane, reliée sur son contour intérieur et extérieur au boitier (28) du dispositif de pression hydraulique (14).

14. Procédé selon la revendication 13, **caractérisé en ce que** deux électrodes (12) sont mises à disposition et, lors de l'usinage, sont déplacées dans le sens contraire l'une de l'autre en direction du composant (2) et en arrière.

15. Procédé selon les revendications 13 ou 14, **caractérisé en ce qu'**au moins lors de l'usinage, un mouvement d'avance du composant (2) se superpose le long d'un axe de déplacement (A) au mouvement de chaque électrode (12).

16. Procédé selon l'une des revendication 13 à 15, **caractérisé en ce qu'**une aube d'un rotor, en particulier d'un rotor à aubage intégré, est usinée comme composant (2).
